# FASCICULE DE BREVET EUROPEEN

(11) **EP 2 998 835 B1**
(45) Date de publication et mention de la délivrance du brevet: **13.11.2019**
(21) Numéro de dépôt: 15184761.3
(22) Date de dépôt: 10.09.2015
(51) Int. Cl.: G06F 3/038

(54) **DISPOSITIF D'ENTRÉE DE DONNÉES ET SES MOYENS DE FREINAGE**
VORRICHTUNG ZUR DATENEINGABE UND SEINE BREMSMITTEL
DATA INPUT DEVICE AND BRAKING MEANS THEREOF

(30) Priorité: 17.09.2014 FR 1402082
(43) Date de publication de la demande: 23.03.2016
(73) Titulaire: THALES, 92400 Courbevoie (FR)
(72) Inventeur: BIGAND, Jean-Louis, 41100 Vendome (FR); MANCEAU, Michael, 28200 Chateaudun (FR)
(74) Mandataire: Collet, Alain

(56) Documents cités:
- EP-A1- 1 739 531
- EP-A2- 2 607 992
- WO-A1-2009/023395
- JP-A- 2009 128 963

## Description

L'invention concerne un dispositif d'entrée de données utilisé pour saisir des données continues ou pseudo continues, comme par exemple pointer des objets sur un écran d'un système informatique. Des dispositifs connus comprennent généralement un corps destiné à être fixé sur un poste de travail et une partie mobile par rapport au corps. Des capteurs permettent de délivrer une information représentative de la position de la partie mobile par rapport au corps. L'information peut être associée à une position sur l'écran au moyen d'un calculateur du système. On s'intéresse plus particulièrement aux dispositifs d'entrée de données possédant une partie mobile en rotation par rapport au corps.

Par exemple, un codeur ou un potentiomètre possèdent un arbre mobile en rotation autour d'un axe par rapport au corps. Les capteurs permettent de définir la position angulaire de l'arbre autour de son axe de rotation par rapport au corps. Un opérateur tourne l'arbre atour de son axe au moyen d'un bouton solidaire de l'arbre. La rotation de l'arbre permet à l'opérateur de sélectionner une donnée dans une plage. La plage peut être continue et la sélection est par exemple réalisée au moyen d'un potentiomètre analogique. La plage peut regrouper une série de valeurs discrètes et la sélection peut être faite au moyen d'un codeur, la rotation de l'arbre permettant d'incrémenter les valeurs selon le pas du codeur.

D'autres dispositifs d'entrée de données, tels qu'une boule de désignation possèdent une partie mobile selon deux degrés de liberté en rotation. La partie mobile est une sphère. Les capteurs délivrent une information de position de la sphère selon les deux degrés de liberté. La boule de désignation peut être utilisée pour pointer un objet à la surface d'un écran. Chacune des deux rotations de la sphère est associée à une translation à la surface de l'écran. En d'autres termes, une boule de désignation peut être utilisée pour pointer des objets sur un écran d'un système informatique. Un opérateur déplace la sphère avec les doigts pour atteindre une position recherchée sur l'écran et ainsi pointer un objet affiché sur l'écran.

Des exemples de dispositifs d'entrée de donnée sont décrits dans les documents EP 2 607 992 A2, WO 2009/023395 A1, JP 2009 128963 A, JP 4 925 336 B2 et EP 1 739 531 A1.

L'invention trouve une utilité particulière pour dispositif d'entrée de données appartenant à un équipement monté à bord d'un aéronef. Le dispositif d'entrée de données peut alors être utilisé pour sélectionner des paramètres de vol affichés sur l'écran du système, la sélection pouvant se faire sous forme d'un choix d'une valeur dans une série au moyen d'un codeur ou d'un potentiomètre ou par pointage d'un objet affiché sur un écran.

L'aéronef peut être soumis à des turbulences qui risquent de perturber le pointage des objets. Plus précisément, les turbulences génèrent des vibrations pouvant entrainer des mouvements incontrôlés de la partie mobile. Même en l'absence de turbulences avérées, de légers phénomènes d'accélération subis par l'équipement, empêchent les membres d'équipage de pointer une zone graphique au-delà d'une certaine précision.

Pour la boule de désignation, une solution habituelle à ce problème consiste à surdimensionner sur l'écran les objets désignables de manière à prendre en compte cette limitation. Par conséquent cela réduit le nombre d'objets affichables sur une surface d'affichage donnée.

On a également tenté de stabiliser la main de l'opérateur en créant des surfaces d'appui adaptées. Un exemple est donné dans la demande de brevet publiée sous le numéro EP 1 552 376 où la partie fixe d'une boule de désignation possède une forme ergonomique destinée à recevoir la paume de l'opérateur, d'où son nom de « repose paume ». Néanmoins, un tel repose paume ne permet pas de stabiliser complètement la sphère au travers des doigts de l'opérateur.

Ces deux solutions sont souvent associées à des moyens de freinage de la sphère. Ces moyens permettent limiter les mouvements incontrôlés de la sphère en cas de vibrations.

Le frein est naturellement solidaire de la partie fixe de la boule de désignation et exerce un effort sur la sphère par exemple au moyen d'un patin frottant contre la sphère. Lors des déplacements de la sphère, l'appui du patin génère un couple de frottement s'opposant aux rotations de la sphère. Le patin est maintenu en appui contre la sphère au moyen d'un ressort prenant appui contre la partie fixe.

En supposant la sphère accessible aux doigts de l'opérateur par le dessus, une solution déjà mise en œuvre consiste à positionner une surface frottante est généralement réalisée par une membrane en matière plastique. La force exercée suivant l'axe vertical de la sphère par la surface frottante est réalisé par un élastomère ou un système à ressort exerçant un appui sur la surface frottante.

Cette disposition entraine de nombreux problèmes. La surface utilisable par l'opérateur est réduite du fait de la présence de la surface frottante au-dessus du plan de symétrie de la sphère.

Le couple de frottement généré par le frein est fortement dépendant de la précision de coaxialité entre l'axe vertical de la sphère et l'axe de la surface de frottement. La sphère est généralement posée sur des pivots formant des capteurs permettant de délivrer une information de la position de la sphère par rapport à la partie fixe. L'écart entre les axes de la sphère et du frein dépend d'une chaine de cotes passant par de nombreuses pièces mécaniques. La précision de coaxialité nécessite des assemblages et des usinages précis.

Le couple de frottement généré dépend de la pression exercée par le dispositif élastique qui dépend elle-même de la position verticale de la sphère. Pour limiter cette dépendance, on peut être amené à prévoir des moyens de calage verticaux du frein. Cette solution est couteuse car les moyens de calage sont à régler unitairement pour chaque boule de désignation.

Le couple généré varie également fortement en fonction des variations du diamètre de la sphère, en particulier lors des variations de température, la faisant monter contre le dispositif de freinage lors d'une utilisation à température élevée ou descendre lors d'une utilisation à température basse.

On a constaté que le frein est particulièrement fragile à une utilisation hors de sa position normale d'utilisation comme lors d'un retournement pendant le transport.

Par ailleurs, le couple de frottement est réglé au montage de la boule de désignation. Pour modifier ce réglage, il est nécessaire de démonter le frein, ce qui est difficilement acceptable dans le domaine aéronautique.

Les freins classiques présentent des frottements secs. Autrement, dit, un couple de décollement non nul est nécessaire pour mettre en mouvement la partie mobile de la boule de désignation. Le couple de décollement doit être le plus faible possible pour permettre un pointage précis sur l'écran. Il ne doit pas être trop faible pour que la boule ne se mette en mouvement seule et faire bouger le curseur sur l'écran lors d'une utilisation en environnement vibratoire.

De plus, lorsque la partie mobile est en mouvement, après son décollement, le couple de frottement ne doit pas être trop élevé pour rester confortable pour l'opérateur. La fourchette de couple acceptable par un opérateur est relativement faible.

Beaucoup de conditions d'utilisation font évoluer le couple de frottement comme par exemple le gras des doigts de l'opérateur ou la poussière déposé sur la sphère, les dilatations différentielles en fonction des variations de température des pièces mécaniques constituant la boule de désignation, la relaxation du dispositif de freinage, l'usure du dispositif de freinage...

Les couples de frottement et de décollement sont fortement variables. Leur maîtrise nécessite une parfaite connaissance des impacts de chaque facteur de dégradation de ces couples pour positionner au mieux la valeur de couple au moment de la livraison de la boule de désignation pour tenir compte des variations dans le temps.

Enfin chaque opérateur a une perception de ces couples et de leur impact opérationnel. Certains opérateurs préfèrent un couple plus élevé pour un réglage fin, d'autres préfèrent un couple faible pour des réglages grossiers mais rapides au détriment du réglage fin. Le couple de freinage ne peut être personnalisé en exploitation par l'opérateur sans démontage du dispositif de freinage et recalage.

Dans les solutions actuelles on tient compte de toutes ces contraintes pour livrer une boule de désignation réglée avec des couples de décollement et de frottement précis dans une tolérance étroite. Ce réglage est effectué par itérations successives avant la livraison de l'équipement. Il est repris régulièrement en opération lorsque l'opérateur estime que le couple n'est plus satisfaisant pour une utilisation convenable.

L'invention vise à pallier tout ou partie des problèmes cités plus haut en proposant un dispositif d'entrée de données possédant un frein beaucoup plus tolérant vis-à-vis de variations dimensionnelles des différentes pièces mécaniques constituant la boule de désignation et réglable facilement par un opérateur lors de l'utilisation du dispositif.

A cet effet, l'invention a pour objet un dispositif d'entrée de données comprenant un corps destiné à être fixé sur un poste de travail, une partie mobile en rotation par rapport au corps, un ensemble de capteurs délivrant une information de position relative de la partie mobile par rapport au corps et des moyens de freinage des mouvements de rotation de la partie mobile par rapport au corps, caractérisé en ce que les moyens de freinage comprennent une bague de frottement enserrant la partie mobile, la bague étant fendue et s'étendant principalement dans un plan perpendiculaire à un axe de symétrie de la partie mobile, un ressort annulaire s'étendant dans le plan et comprimant radialement la bague de frottement contre la partie mobile et des moyens de réglage de longueur du ressort annulaire.

En plus du réglage du frein en fonction des contraintes énoncées précédemment, le réglage du frein en opération peut se faire par l'opérateur en fonction des conditions vibratoires rencontrées. A bord d'un aéronef, lorsque des turbulences apparaissent, l'opérateur peut resserrer le frein pour éviter des déplacements intempestifs d'un curseur associé au dispositif. Lorsque les turbulences disparaissent, l'opérateur peut desserrer le frein pour améliorer la précision de la saisie opérée par le dispositif.

L'invention sera mieux comprise et d'autres avantages apparaîtront à la lecture de la description détaillée de modes de réalisation donnés à titre d'exemple, description illustrée par le dessin joint dans lequel :
la figure 1 représente en perspective une boule de désignation ;
la figure 2 représente en vue de face la boule de désignation ;
la figure 3 représente une coupe partielle de la boule de désignation ;
la figure 4 représente des moyens de réglage d'un frein adapté à un dispositif d'entrée de données ;
la figure 5 représente les moyens de la figure 4 mis en œuvre dans la boule de désignation ;
la figure 6 représente les moyens de la figure 4 mis en œuvre dans un dispositif d'entrée de données dont la partie mobile est un arbre mobile selon une seule rotation.

Par souci de clarté, les mêmes éléments porteront les mêmes repères dans les différentes figures.

L'invention peut être mise en œuvre dans différents types de dispositifs d'entrée de données possédant une partie mobile destinée à tourner par rapport à un corps fixe. La partie mobile peut posséder deux degrés de liberté en rotation comme par exemple dans une boule de désignation, ou un seul degré de liberté en rotation comme par exemple dans un potentiomètre ou un codeur rotatif.

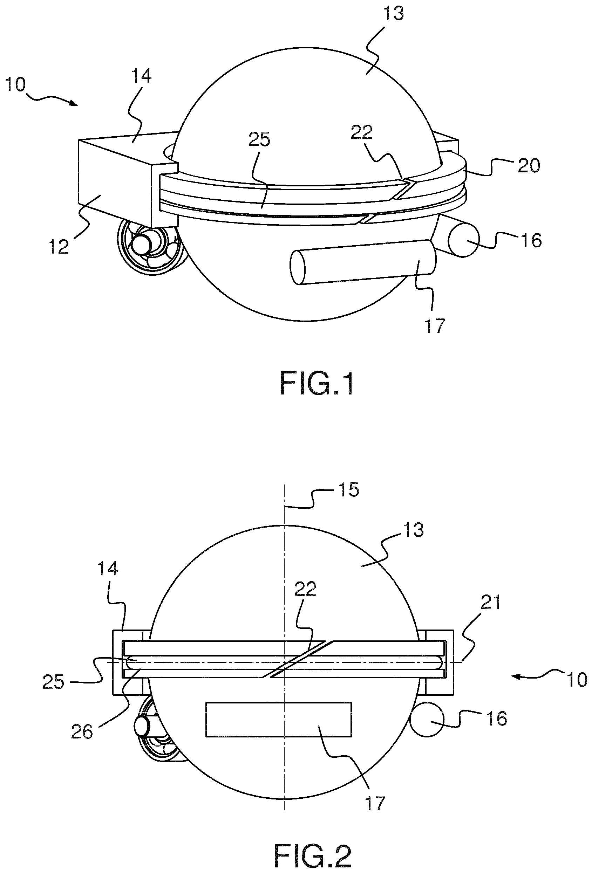

La figure 1 représente en perspective une boule de désignation 10 destiné à être actionnée par la main d'un opérateur. La boule de désignation 10 comprend un corps fixe 12 et une sphère 13 que l'opérateur peut faire tourner par rapport au corps fixe 12. La sphère 13 forme la partie mobile du dispositif d'entrée de données. Dans l'exemple représenté, le corps fixe 12 comprend une plaque 14 destinée à être fixée sur un poste de travail comme par exemple une planche de bord d'un aéronef. La boule de désignation 10 comprend un ensemble de capteurs délivrant une information de position relative de la sphère 13 par rapport au corps fixe 12.

La figure 2 représente en vue de face la boule de désignation 10. Cette vue est perpendiculaire à la plaque 14. Le poste de travail dans lequel est installée la boule de désignation 10 peut être formé par un plan de travail horizontal au voisinage de la boule de désignation 10. La plaque 14 est alors également horizontale. La sphère 13 comprend une partie émergeant au dessus de la plaque 14. C'est cette partie de la sphère que l'opérateur manœuvre avec ses doigts. L'ensemble de capteurs est situé sous la plaque 14 à l'intérieur du corps fixe 12. Une boule de désignation 10 mettant en œuvre l'invention peut bien entendue être positionnée sur un plan de travail incliné. On définit un axe 15 de symétrie de la sphère 13, l'axe 15 étant perpendiculaire à la plaque 14. L'axe 15 est vertical si le plan de la plaque 14 est horizontal.

L'ensemble de capteurs comprend par exemple deux galets 16 et 17 roulant sans frottement contre la sphère 13 et permettant chacun de connaitre la position angulaire de la sphère 13 autour d'axes parallèles au plan de la plaque 14. Les galets 16 et 17 sont par exemple fixés chacun au rotor d'un codeur angulaire délivrant l'information de position relative de la sphère 13. D'autres types de capteurs peuvent être utilisés, comme par exemple des capteurs optiques ou magnétiques sensibles aux déplacements de la sphère 13. L'information issue de l'ensemble de capteurs est transmise à un calculateur pouvant appartenir à la boule de désignation 10 ou être déporté. Le calculateur est configuré pour décoder les informations reçues des codeurs angulaires associés aux galets 16 et 17. Le calculateur envoie par exemple les informations décodées vers le cœur d'un système informatique comprenant un écran sur lequel un pointeur peut se déplacer en fonction des informations.

Lorsque l'environnement dans lequel est installée la boule de désignation peut être soumis à des vibrations, celles-ci peuvent entraîner des mouvements incontrôlés de la sphère 13. Pour limiter ces mouvements, la boule de désignation comprend des moyens de freinage des mouvements de rotation de la sphère 13 par rapport au corps 12. Selon l'invention, les moyens de freinage comprennent une bague de frottement 20 enserrant la sphère 13. Le frottement de la bague 20 contre la sphère 13 génère un couple résistant permettant de freiner les mouvements de rotation de la sphère 13 sur elle-même.

La bague s'étend principalement dans un plan 21 perpendiculaire à l'axe 15, c'est-à-dire parallèlement à la plaque 14. La bague 20 a une forme d'anneau circulaire dans le plan 21. Dans la pratique, la bague 20 possède une certaine épaisseur perpendiculairement au plan 21. L'épaisseur de la bague 20 est nettement inférieure au diamètre de la bague 20 dans le plan 21. Sur tout son diamètre, la bague contient le plan 21.

La sphère 13 est posée sur les galets 16 et 17. Afin de détendre la chaîne de cote reliant la sphère 13 aux moyens de freinage, la bague 20 est libre en translation par rapport au corps 12 dans le plan 21. Autrement dit la bague 20 possèdent deux degrés de liberté en translation dans le plan 21. Ces deux degrés de liberté combinés au frottement de la bague 20 contre la surface de la sphère 13 permettent à la bague 20 de centrer automatiquement son diamètre sur la sphère 13 et plus précisément sur son axe 15.

Avantageusement, le plan 21 dans lequel la bague 20 s'étend est un plan de symétrie de la sphère 13. Autrement dit, le plan 21 coupe la sphère par un grand diamètre de la sphère 13. La bague 20 frotte sur un diamètre de la sphère 13. Le fait de disposer le plan 21 au niveau d'un plan de symétrie de la sphère 13 permet d'augmenter au maximum la surface de la partie émergeante de la sphère 13 tout en assurant un maintien de la sphère 13 dans la partie fixe 12 de la boule de désignation.

Alternativement, le plan 21 peut être disposé de façon à ce que la partie émergeante de la sphère 13 soit plus petite pour des raisons d'installation dans le poste de travail dans lequel est installée la boule de désignation 10. On peut aussi augmenter la surface de la partie émergeante de la sphère 13 au-delà du plan de symétrie de la sphère 13.

La bague 20 est fendue. Autrement dit, la bague 20 forme un anneau circulaire ouvert. Une fente 22 permet de réaliser cette ouverture est visible sur les deux figures 1 et 2. La fente donne à la bague une certaine élasticité lui permettant de s'adapter à des écarts de diamètre de la sphère 13. Ces écarts sont par exemple dus aux tolérances de fabrication de la sphère 13 ou encore à des dilatations thermiques de la sphère 13 durant son utilisation. L'adaptation de la bague 20 lui permet également de compenser une usure de sa surface frottante qui intervient obligatoirement tout au long de l'utilisation de la boule de désignation 10. La fente 22 peut être perpendiculaire au plan 21 ou inclinée comme représenté sur les figures.

Deux caractéristiques du matériau de la bague 20 sont utilisées pour lui permettre de remplir sa fonction de freinage de la sphère 13 : D'une part, l'élasticité de la bague 20 caractérisée ses dimensions et son module d'Young lui permet d'assurer un effort de serrage sur la sphère 13. D'autre part, le coefficient de frottement bague 20/sphère 13 lui permet de quantifier le couple de frottement associé à l'effort de serrage.

Il est possible de dissocier ces deux caractéristiques en ajoutant un élément élastique supplémentaire permettant d'assurer le serrage de la bague 20 contre la sphère 13. A cet effet, les moyens de freinage comprennent avantageusement un ressort annulaire 25 s'étendant dans le plan 21 et comprimant radialement la bague 20 contre la sphère 13. La compression radiale de la bague 20 permet de simplifier la réalisation de l'effort de compression. Le ressort 25 est disposé dans le plan 21 de la bague 20 et permet donc de libérer l'espace situé sous le plan 21 dans la boule de désignation 10. Le ressort 25 peut être disposé dans une gorge 26 réalisé dans la bague 20.

La bague 20 est par exemple réalisée en polytétrafluoroéthylène (PTFE). Ce matériau possède un module d'Young trop faible pour assurer un effort suffisant de la bague sur la sphère 13. Pour cela, le serrage de la bague 20 sur la sphère au moyen d'un ressort par exemple réalisé en fil d'acier à ressort. Par ailleurs, le polytétrafluoroéthylène possède un coefficient de frottement relativement faible. Ceci présente l'avantage de réduire la sensation de frottements secs et de décollement intervenant lorsqu'un opérateur commence un mouvement de la sphère.

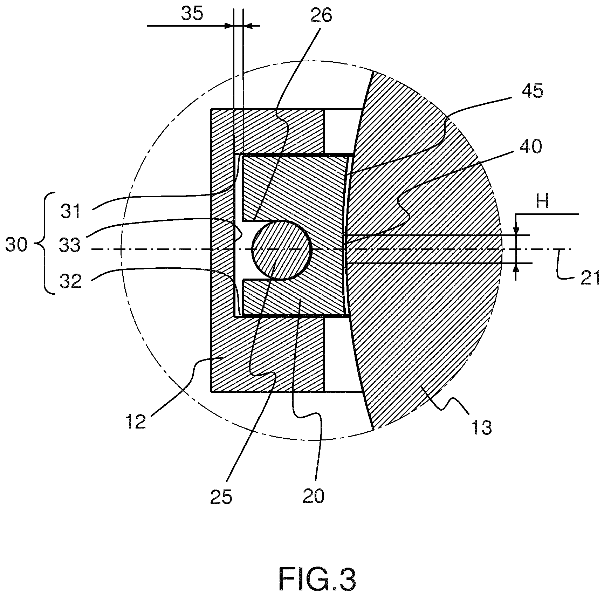

La figure 3 représente en coupe partielle la liaison entre la bague 20 et le corps 12. Afin d'assurer la liberté en translation de la bague 20 par rapport au corps 12 dans le plan 21, le corps 12 comprend une gorge 30 s'étendant dans le plan 21. Comme la bague 20, la gorge est annulaire et centrée sur l'axe 15. Le diamètre extérieur de la bague 20 est inférieur au diamètre intérieur de la gorge 30.

Dans un plan radial autour de l'axe 15, la gorge a une section constante possédant principalement deux flancs 31, 32 et un fond 33. Les flancs 31 et 32 sont sensiblement parallèles au plan 21. Le fond 33 est sensiblement perpendiculaire au plan 21. La bague 20 est guidée en translation entre les deux flancs 31 et 32. Un jeu fonctionnel 35 est prévu entre la bague 20 et le fond 33. Le jeu fonctionnel 35 permet la liberté en translation de la bague 20 par rapport au corps 12. La valeur du jeu 35 est choisie en fonction des tolérances de positionnement de la sphère 13 par rapport au corps 12. La valeur du jeu 35 est égale à la différence entre le diamètre extérieur de la bague 20 et le diamètre intérieur de la gorge 30. Le jeu fonctionnel 35 permet aussi de tenir compte de variations dimensionnelles de la sphère 13 lors de variations de température.

En pratique afin d'insérer la bague 20 dans le corps 12, la plaque 14 peut être constituée de deux demi plaques fixées l'une à la l'autre après montage de la bague 20. La gorge 30 s'étend dans les deux demi-plaques. Sur les figures 1 et 2, seule une des demi-plaques est représentée. L'assemblage de la bague 20 et des deux demi-plaques se fait en deux temps. Tout d'abord, on insère la bague dans une première des deux demi-plaques dans un mouvement de translation dont la direction est portée par plan 21. Ensuite on insère la seconde demi-plaque, toujours selon le même mouvement de translation pour fermer la gorge 30 autour de la bague 20.

La bague 20 comprend une surface de frottement 40 destinée à frotter contre la sphère 13 pour freiner ses mouvements de rotations. Le jeu fonctionnel 35 permet d'absorber les écarts de position de la sphère 13 en translation dans le plan 21. Il est également avantageux de prévoir des moyens pour d'absorber les écarts de position de la sphère 13 perpendiculairement au plan 21. A cet effet, la surface de frottement 40 possède une forme cylindrique s'étendant perpendiculairement au plan 21. Autrement dit la surface de frottement 40 forme une portion de cylindre d'axe 15. La hauteur H du cylindre, mesurée selon l'axe 15 est défini en fonction des variations de hauteur du plan 21, plan de symétrie de la sphère 13 portant un grand diamètre de la sphère 13. De façon plus générale, la surface cylindrique 40 étant configurée pour autoriser un déplacement de la sphère 13 en translation perpendiculairement au plan 21.

Alternativement, la surface de frottement 40 peut avoir une forme tronconique possédant un faible angle d'ouverture. L'angle d'ouverture est orienté de façon à générer un effort de la sphère 13 en direction des galets 16 et 17 et ainsi plaquer la sphère 13 contre les galets.

Sur la figure 3, la surface de frottement 40 a été représentée à légère distance de la sphère 13. En fonctionnement, il est bien entendu que la surface de frottement 40 est en pression contre la sphère sous l'effet de l'élasticité du ressort 25. Cette pression génère le couple de frottement utilisé pour le freinage de la sphère 13.

La sphère 13 est susceptible de se décoller des deux galets 16 et 17, par exemple sous l'effet de vibrations importantes lors du fonctionnement ou lors du transport de la boule de désignation 10 avant son installation dans son plan de travail. Un tel décollement peut entrainer une extraction de la sphère 13 hors de son logement. Pour limiter ce risque, il est avantageux de prévoir des moyens pour limiter la translation de la sphère 13 perpendiculairement au plan 21. Autrement dit, la boule de désignation 10 peut comprendre une butée contre laquelle la sphère 13 est susceptible de venir en appui pour éviter que la sphère 13 ne puisse se désolidariser complètement du corps 12. Cette fonction de butée est avantageusement réalisée par la bague 20 elle-même qui possède alors une butée 45 apte à limiter une translation de la sphère 13 perpendiculairement au plan 21.

Pour éviter que la sphère 13 ne viennent se coincer dans la bague 20, la butée 45 est avantageusement une portion de surface sphérique complémentaire de celle de la sphère 13 et venant dans le prolongement la surface de frottement 40 sans rupture de pente. Plus précisément, la surface de frottement 40 est de forme cylindrique de même diamètre que la sphère 13. Le plus grand diamètre de la portion de surface sphérique est également le diamètre de la sphère 13. La butée 45 referme légèrement l'ouverture de la bague 20 au-dessus du plan 21.

Avantageusement, le dispositif d'entrée de donnée comprend des moyens de réglage de son frein. Les moyens de réglage peuvent être mis en œuvre en combinaison de la liberté en translation de la bague 20 dans le plan 21. Cette combinaison n'est pas obligatoire. Alternativement, les moyens de réglage du frein présentent déjà un avantage pour un frein qui ne posséderait pas la liberté en translation décrite plus haut.

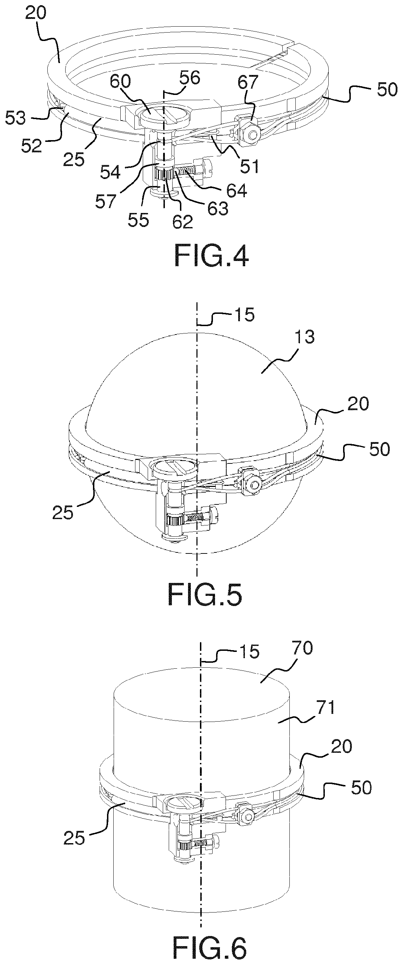

La figure 4 représente des moyens de réglage du couple résistant que la bague 20 exerce sur la sphère 13. Pour ne pas surcharger la figure, la sphère 13 et le corps 12 ont été masqués. Les moyens de réglage du frein comprennent principalement un fil 50 permettant de régler la tension du ressort 25 et donc sa longueur définie comme la longueur de la courbe le long de laquelle s'étend le ressort 25. Le ressort 25 comprend deux extrémités 51 et 52. L'extrémité 51 est fixée à la bague 20 et l'extrémité 52 est fixée au fil 50. Le fil 50 est beaucoup plus rigide que le ressort 25. Une variation de longueur du fil 50 permet de régler la tension du ressort 25. Cette variation de tension est encaissée par la bague 20 et se traduit par une variation de couple exercée par la bague 20 sur la sphère 13.

Alternativement, il est possible de se passer du fil 50. Pour régler la tension du ressort 25, il est possible de régler directement sa longueur. A cet effet, le ressort est par exemple formé d'un ruban élastique fixé à la bague 20 par son extrémité 51 et sur un tambour à son extrémité 52. La rotation du tambour agit directement sur la tension du ressort 25.

Dans l'exemple représenté, le ressort annulaire 25 ne s'étend pas sur un tour complet autour de l'axe 15. Le ressort 25 s'étend par exemple sur un secteur angulaire de l'ordre de 45°. Alternativement, le ressort 25 peut faire plus d'un tour autour de l'axe 15. On privilégie cependant la variante ou le ressort s'étend sur un secteur angulaire réduit afin de limiter les frottements du ressort 25 contre la bague 20 lors du réglage de la tension du ressort 25. Le secteur angulaire non couvert par le ressort 25 est occupé par le fil 50.

Le fil 50 comprend deux extrémités 53 et 54. L'extrémité 53 est fixée à l'extrémité 52 du ressort 25 et l'extrémité 54 est fixée à la bague 20. Le réglage de la longueur du fil permet le réglage de la tension du ressort 25.

Afin de faciliter la manipulation des moyens de réglage par l'opérateur, les moyens de réglage comprennent un doigt 55 mobile en rotation par rapport à la bague 20, par exemple autour d'un axe 56 sensiblement perpendiculaire au plan 21. Le fil 50 s'enroule autour du doigt 55 au niveau de sa seconde extrémité 54. Plus précisément, la bague 20 possède une liaison pivot 57 coupée partiellement sur la figure 4. Le doigt 55 peut tourner dans la liaison pivot 57 autour de l'axe 56. L'extrémité 54 du fil 50 peut être fixée au doigt 55. La rotation du doigt 55 permet un enroulement du fil 50 autour de la surface extérieure du doigt 55. Le déroulement ou l'enroulement du fil 50 autour du doigt 55 permet respectivement d'allonger ou de raccourcir le fil 50 et donc de modifier la longueur du fil 50.

D'autres moyens peuvent être mis en œuvre pour solidariser l'extrémité 54 du fil au doigt 55. Le fil 50 peut être formé de plusieurs brins, comme représenté sur la figure 4. L'extrémité 54 du fil 50 peut être formée par une boucle joignant deux brins. Le doigt 55 est percé perpendiculairement à son axe de rotation 56. La boucle traverse le perçage du doigt 55. La rotation du doigt 55 entraine les brins formant la boucle sur la surface extérieure du doigt 55, permettant de raccourcir le fil 50 pour augmenter la tension du ressort 25.

Le doigt 55 comprend avantageusement une tête 60 destinée à être manœuvrée par l'opérateur. Pour faciliter sa manœuvre, la tête 60 comprend par exemple une fente dans laquelle une pièce de monnaie ou un outil tel qu'un tournevis peut être inséré. Il est également possible de se passer d'objet extérieur (outil ou pièce de monnaie) au moyen d'une forme adaptée de la tête, comme par exemple un moletage réalisé sur une surface cylindrique de la tête, surface s'étendant selon l'axe 56. L'opérateur peut alors manipuler le moletage entre ses doigts.

Avantageusement, le doigt 55 peut prendre plusieurs positions angulaires stables autour de son axe 56. Ces différentes positions stables permettent à la tension du ressort 25 de prendre plusieurs valeurs distinctes. Ces différentes positions angulaires peuvent être obtenues par adhérence lors de la rotation du doigt 55 dans sa liaison pivot 57. Pour obtenir cette adhérence, on peut prévoir un joint souple dans la liaison pivot. Ce joint souple possède un couple de décollement supérieur au couple nécessaire pour modifier la longueur du fil 50. Le couple de décollement est déterminé en fonction du couple que peut exercer l'opérateur sur la tête 60, soit avec un outil soit avec ses doigts.

Alternativement, dans le mode de réalisation représenté, les positions stables du doigt 55 autour de son axe de rotation 56 sont prédéfinies et obtenues par un dispositif cranté. Plus précisément, le doigt 55 peut comprendre des crans 62 disposés angulairement autour de l'axe 56. Une bille 63, poussée par un ressort 64, peut s'insérer entre les crans 62. Le ressort 64 peut être taré afin de régler le couple qu'il est nécessaire d'appliquer au doigt 55 pour que la bille 63 passe d'un cran au suivant.

Avantageusement, les moyens de réglage comprennent des moyens de prétension du fil 50. Ces moyens permettent d'assurer une tension minimale du fil et donc du ressort 25. Autrement dit, les moyens de réglage de la tension du ressort 25 sont utilisable en opération permettent le réglage de tension dans une plage dont la borne inférieure est définie par les moyens de prétension. Les moyens de prétension sont utilisables lors de la fabrication du dispositif d'entrée de données. Les moyens de prétension peuvent être liés au doigt 55. Plus précisément, la prétension se fait par fixation de la deuxième extrémité du fil 50 sur le doigt 55.

Avantageusement, pour faciliter la conception du doigt 55 et de sa liaison pivot 57, les moyens de prétension sont indépendants du doigt 55. Comme représenté sur la figure 4, lorsque le fil 50 comprend plusieurs brins, on peut mettre en œuvre un serre câble 67 distant du doigt 55. Le serre câble 67 permet de tendre les brins formant le fil 50.

La figure 5 représente à nouveau la boule de désignation 10. On retrouve les moyens de réglage de la tension du ressort 25 décrits à l'aide de la figure 4.

La figure 6, représente les moyens de réglage de la tension du ressort 25 décrits à l'aide de la figure 4 et mis en œuvre dans un dispositif d'entrée de données dont la partie mobile est un arbre 70 mobile selon une seule rotation autour de l'axe 15. L'arbre 70 comprend une surface cylindrique 71 sur laquelle frotte la bague 20. La surface cylindrique 71 s'étend selon l'axe 15. Ce dispositif d'entrée de données permet d'entrer une donnée en fonction de la position angulaire de l'arbre 70 autour de l'axe 15. La position angulaire est par exemple traduite en information électrique au moyen d'un potentiomètre ou d'un codeur optique.

## Revendications

1. Dispositif d'entrée de données comprenant un corps (12) destiné à être fixé sur un poste de travail, une partie mobile (13) en rotation par rapport au corps (12), un ensemble de capteurs (16, 17) délivrant une information de position relative de la partie mobile (13 ; 70) par rapport au corps (12) et des moyens de freinage des mouvements de rotation de la partie mobile (13 ; 70) par rapport au corps (12), **caractérisé en ce que** les moyens de freinage comprennent une bague de frottement (20) enserrant la partie mobile (13; 70), la bague (20) étant fendue et s'étendant principalement dans un plan (21) perpendiculaire à un axe (15) de symétrie de la partie mobile (13 ; 70), un ressort annulaire (25) s'étendant dans le plan (21) et comprimant radialement la bague de frottement (20) contre la partie mobile (13 ; 70) et des moyens de réglage de longueur du ressort annulaire (25).

2. Dispositif d'entrée de données selon la revendication 1, **caractérisé en ce que** le ressort annulaire (25) comprend deux extrémités (51, 52), une première (51) des deux extrémités étant fixée à la bague de frottement (20), **en ce que** les moyens de réglage comprennent un fil (50) de longueur réglable comprenant deux extrémités (53, 54) dont une première (53) est fixée à une seconde (52) des deux extrémités du ressort annulaire (25) et dont une seconde (54) des deux extrémités du fil (50) est fixée à la bague de frottement (20).

3. Dispositif d'entrée de données selon la revendication 2, **caractérisé en ce que** les moyens de réglage comprennent un doigt (55) mobile en rotation par rapport à la bague (20) et **en ce que** le fil (50) s'enroule autour du doigt (55) au niveau de sa seconde extrémité (54).

4. Dispositif d'entrée de données selon la revendication 3, **caractérisé en ce que** la rotation du doigt (55) se fait autour d'un axe (56) sensiblement perpendiculaire au plan (21).

5. Dispositif d'entrée de données selon l'une des revendications 3 ou 4, **caractérisé en ce que** la rotation du doigt (55) se fait autour d'un axe (56) et **en ce que** le doigt (55) peut prendre plusieurs positions angulaires stables (62, 63, 64) prédéfinies autour de son axe (56).

6. Dispositif d'entrée de données selon l'une des revendications 2 à 5, **caractérisé en ce que** les moyens de réglage comprennent des moyens de prétension (67) du fil (50).

7. Dispositif d'entrée de données selon la revendication 6 en tant que revendication dépendante de l'une des revendications 3 à 5, **caractérisé en ce que** les moyens de prétension (67) sont indépendants du doigt (55).

8. Dispositif d'entrée de données selon l'une des revendications précédentes, **caractérisé en ce que** la bague (20) est libre en translation par rapport au corps (12) dans le plan (21) dans lequel s'étend la bague (20).

9. Dispositif d'entrée de données selon l'une des revendications précédentes, **caractérisé en ce qu'**il forme une boule de désignation (10), **en ce que** la partie mobile est une sphère (13).

10. Dispositif d'entrée de données selon l'une des revendications 1 à 8, **caractérisé en ce que** la partie mobile est un arbre (70) mobile selon une seule rotation autour de l'axe (15), **en ce que** l'arbre (70) comprend une surface cylindrique (71) s'étendant selon l'axe (15) et sur laquelle frotte la bague (20).

## Patentansprüche

1. Vorrichtung zur Eingabe von Daten, umfassend einen Körper (12), der zum Befestigen an einer Arbeitsstation bestimmt ist, einen relativ zu dem Körper (12) rotationsbeweglichen Teil (13), eine Gruppe von Sensoren (16, 17), die eine Positionsinformation über den beweglichen Teil (13; 70) in Bezug auf den Körper (12) liefern, und Mittel zum Bremsen der Rotationsbewegungen des beweglichen Teils (13; 70) in Bezug auf den Körper (12), **dadurch gekennzeichnet, dass** die Bremsmittel Folgendes umfassen: einen Friktionsring (20), der den beweglichen Teil (13; 70) umgreift, wobei der Ring (20) geteilt ist und sich hauptsächlich in einer Ebene (21) lotrecht zu einer Symmetrieachse (15) des beweglichen Teils (13; 70) erstreckt, und eine ringförmige Feder (25), die sich in der Ebene (21) erstreckt und den Friktionsring (20) radial gegen den beweglichen Teil (13; 70) drückt, und Mittel zum Regulieren der Länge der ringförmigen Feder (25).

2. Vorrichtung zur Eingabe von Daten nach Anspruch 1, **dadurch gekennzeichnet, dass** die ringförmige Feder (25) zwei Enden (51, 52) aufweist, wobei ein erstes (51) der beiden Enden an dem Friktionsring (20) befestigt ist, dadurch, dass die Regelmittel einen Faden (50) mit einer regelbaren Länge umfassen, umfassend zwei Enden (53, 54), von denen ein erstes (53) an einem zweiten (52) der beiden Enden der ringförmigen Feder (25) befestigt ist und wobei ein zweites (54) der beiden Enden des Fadens (50) an dem Friktionsring (20) befestigt ist.

3. Vorrichtung zur Eingabe von Daten nach Anspruch 2, **dadurch gekennzeichnet, dass** die Regelmittel einen Finger (55) umfassen, der in Bezug auf den Ring (20) drehbeweglich ist, und dadurch, dass sich der Faden (50) um den Finger (55) an seinem zweiten Ende (54) wickelt.

4. Vorrichtung zur Eingabe von Daten nach Anspruch 3, **dadurch gekennzeichnet, dass** die Rotation des Fingers (55) um eine Achse (56) im Wesentlichen lotrecht zu der Ebene (21) erfolgt.

5. Vorrichtung zur Eingabe von Daten nach Anspruch 3 oder 4, **dadurch gekennzeichnet, dass** die Rotation des Fingers (55) um eine Achse (56) erfolgt, und dadurch, dass der Finger (55) mehrere vordefinierte stabile Winkelpositionen (62, 63, 64) um seine Achse (56) einnehmen kann.

6. Vorrichtung zur Eingabe von Daten nach einem der Ansprüche 2 bis 5, **dadurch gekennzeichnet, dass** die Regelmittel Mittel zum Vorspannen (67) des Fadens (50) umfassen.

7. Vorrichtung zur Eingabe von Daten nach Anspruch 6 sowie nach einem von den Ansprüchen 3 bis 5 abhängigen Anspruch, **dadurch gekennzeichnet, dass** die Vorspannmittel (67) von dem Finger (55) unabhängig sind.

8. Vorrichtung zur Eingabe von Daten nach einem der vorherigen Ansprüche, **dadurch gekennzeichnet, dass** sich der Ring (20) translational frei in Bezug auf den Körper (12) in der Ebene (21) bewegen kann, in der sich der Ring (20) erstreckt.

9. Vorrichtung zur Eingabe von Daten nach einem der vorherigen Ansprüche, **dadurch gekennzeichnet, dass** sie eine Bezeichnungskugel (10) umfasst, dadurch, dass der bewegliche Teil eine Sphäre (13) ist.

10. Vorrichtung zur Eingabe von Daten nach einem der Ansprüche 1 bis 8, **dadurch gekennzeichnet, dass** der bewegliche Teil eine gemäß einer einzigen Rotation um die Achse (15) bewegliche Welle (70) ist, dadurch, dass die Welle (70) eine zylindrische Fläche (71) umfasst, die sich entlang der Achse (15) erstreckt und auf der der Ring (20) reibt.

## Claims

1. Data input device comprising a body (12) intended to be fixed on a workstation, a part (13) that is rotationally mobile in relation to the body (12), a set of sensors (16, 17) delivering information on the relative position of the mobile part (13; 70) in relation to the body (12) and means for braking the rotational movements of the mobile part (13; 70) in relation to the body (12), **characterized in that** the braking means comprise a friction ring (20) encircling the mobile part (13; 70), the ring (20) being split and extending mainly in a plane (21) perpendicular to an axis (15) of symmetry of the mobile part (13; 70), an annular spring (25) extending in the plane (21) and radially compressing the friction ring (20) against the mobile part (13; 70) and means for adjusting the length of the annular spring (25).

2. Data input device according to claim 1, **characterized in that** the annular spring (25) comprises two ends (51, 52), a first (51) of the two ends being fixed to the friction ring (20), **in that** the adjustment means comprise a wire (50) of adjustable length comprising two ends (53, 54) of which a first (53) is fixed to a second (52) of the two ends of the annular spring (25) and of which a second (54) of the two ends of the wire (50) is fixed to the friction ring (20).

3. Data input device according to claim 2, **characterized in that** the adjustment means comprise a finger (55) that is rotationally mobile relative to the ring (20) and **in that** the wire (50) is wound around the finger (55) at its second end (54).

4. Data input device according to claim 3, **characterized in that** the rotation of the finger (55) takes place about an axis (56) substantially perpendicular to the plane (21).

5. Data input device according to one of claims 3 or 4, **characterized in that** the rotation of the finger (55) takes place about an axis (56) and **in that** the finger (55) can assume a number of stable angular positions (62, 63, 64) predefined about its axis (56).

6. Data input device according to one of claims 2 to 5, **characterized in that** the adjustment means comprise means (67) for pre-tensioning the wire (50).

7. Data input device according to claim 6 as claim dependent on one of claims 3 to 5, **characterized in that** the pre-tensioning means (67) are independent of the finger (55).

8. Data input device according to one of the preceding claims, **characterized in that** the ring (20) is translationally free in relation to the body (12) in the plane (21) in which the ring (20) extends.

9. Data input device according to one of the preceding claims, **characterized in that** it forms a track ball (10), and **in that** the mobile part is a sphere (13).

10. Data input device according to one of claims 1 to 8, **characterized in that** the mobile part is a shaft (70) that is mobile in a single rotation about the axis (15), and **in that** the shaft (70) comprises a cylindrical surface (71) extending along the axis (15) and on which the ring (20) rubs.
